# EUROPEAN PATENT SPECIFICATION

(11) **EP 1 042 982 B1**
(45) Date of publication and mention of the grant of the patent: **03.11.2004**
(21) Application number: 00106551.5
(22) Date of filing: 27.03.2000
(51) Int. Cl.: A47L 15/23, A47L 15/42, F16K 1/22

(54) **Dishwasher with upper and lower spray arms**
Geschirrspülmaschine mit oberem und unterem Sprüharm
Machine à laver la vaisselle avec bras d'arrosage supérieur et inférieur

(30) Priority: 30.03.1999 DE 19914359
(43) Date of publication of application: 11.10.2000
(73) Proprietor: WHIRLPOOL CORPORATION, Benton Harbor Michigan 49022 (US)
(72) Inventor: Rauber, Ludwin, c/o Whirlpool Europe s.r.l., 21025 Comerio (IT)
(74) Representative: Guerci, Alessandro

(56) References cited:
- EP-A- 0 697 188
- EP-A- 0 702 175
- DE-A- 2 544 299
- FR-A- 2 505 643
- US-A- 2 864 410

## Description

The invention relates to a dishwasher having an upper and a lower crockery tray with associated rotatable spray arms, in which the spray arms are fed with washing liquid alternately by a circulating pump, the spray arms being connectable in succession to the output of the circulating pump by means of changeover-valve means in the circulating circuit.

A dishwasher of this kind is known from DE 91 04 444 U1. The alternating supply of the washing liquid to the upper and lower spray arms has the advantage of appreciably reducing the volume of water with which the dishwasher is filled. This enables the circulating pump to be of considerably lower capacity. Also, the washing process requires a smaller amount of washing liquid and calls for less energy to be consumed to heat the washing liquid. Because the pump is of lower capacity and the volumetric flowrate is lower, a reduction in the amount of noise generated can also be expected.

FR-A-2 505 643 discloses a dishwasher according to the preamble of claim 1. DE-A-2544299 discloses a valve for blood or the like having two elliptic closing discs on the same axle.

What is used as the changeover-valve means in the known dishwasher is a rotary disc valve and this has to be moved while the circulating pump is running. Because the valve is exposed to the pressure of the washing liquid when this is done, the switchover means has to apply a correspondingly high force to the valve to move it and this means that expensive gear motors for example are required.

The object of the invention is, in a dishwasher of the above-mentioned kind, to provide a changeover-valve means which can be changed over even while the circulating pump is running without applying a high force.

According to the invention, this objets is achieved according to the features of claim 1 and 2, respectively.

Under all circumstances the pressure of the washing liquid so acts on both halves of the valve discs which have been rotatably mounted in this way that its actions in the different directions of rotation cancel each other out and the valve discs can be turned to the switched positions by applying a small force. The switchover means for turning the valve discs can be designed to be of low power and thus of small size.

In a refinement, to allow the valve discs to be mounted in rotation, provision is made for the outer contours of the valve discs to be matched to the internal cross-section of the risers and for the shaft(s) on which they are mounted to be aligned along the axes of symmetry of the valve discs perpendicularly to the longitudinal axes of the associated risers. The outer contours of the valve discs and the internal cross-sections of the risers may be circular or oval in this case.

To allow the valve discs to take up different switched positions when mounted on a common shaft, it is easy for provision to be made for the valve discs to be arranged to be held secure in rotation on a common mounting shaft and for their planes to be offset relative to one another by the angle of rotation between the first and second switched positions.

If each valve disc has a switchover means of its own associated with it, then the layout is such that the valve discs are arranged on separate mounting shafts and in each switched state of the switchover means the valve discs take up different switched positions (opened and closed positions respectively). The positions set to are such that the two switched positions of the valve discs can in each case be set to by an angle of rotation of the mounting shafts of 90°. There are then two possibilities for the rotary movement. On the one hand provision may be made for the two switched positions of the valve discs to be set to by turning the mounting shafts through 90° alternately in the two directions of rotation. On the other hand, the arrangement selected may equally well be such that the two switched positions of the valve discs are set to by continually turning the mounting shafts through 90° at a time in one and the same direction.

When the valve discs are turned in two directions of rotation, provision may also be made for limits to be set for the switched positions of the valve discs in the risers by stops, at least for the closed position, the stops being used to seal off the valve discs in their closed positions.

For the switchover means of low power and small size, provision is made in a refinement for the switching means to take the form of a solenoid with an armature, the armature being coupled to the associated mounting shaft in the valve chamber, for the armature and hence the valve discs to be held in the first switched position by return springs when the solenoid is not energised, and for the armature and the valve discs to be set to the second switched position when the solenoid is energised. What are used to provide the coupling between the armatures of the solenoids and the shafts on which the valve discs are mounted are crank-type linkage members which change the straight-line movements of the armature into rotary movements by the shafts on which the valve discs are mounted.

If the risers do not branch off from the valve chamber in a common plane, this can be corrected if the valve discs, being arranged to be held secure in rotation on a common mounting shaft, are offset from one another not only by the angle of offset between the two switched positions but also, and additionally, by the angle of displacement between the longitudinal axes of the risers.

If the displacement between the longitudinal axes of the risers is not simply in a single plane, then the arrangement which should be adopted is one where the valve discs have separate mounting shafts and the mounting shafts have separate switchover means.

An embodiment of the invention will now be explained in more detail by reference to embodiments shown in the drawings, in which:
- Fig.1: is a section through a changeover-valve means having two valve discs and a common switching means,
- Fig.2: is a partial section on line II-II of Fig.1,
- Fig.3: is a partial section on line III-III of Fig.1,
- Fig.4: is a partial section on line IV-IV of Figs. 2 and 3, and
- Fig.5: is a section through a changeover-valve means having two valve discs with separate mounting shafts and separate switching means.

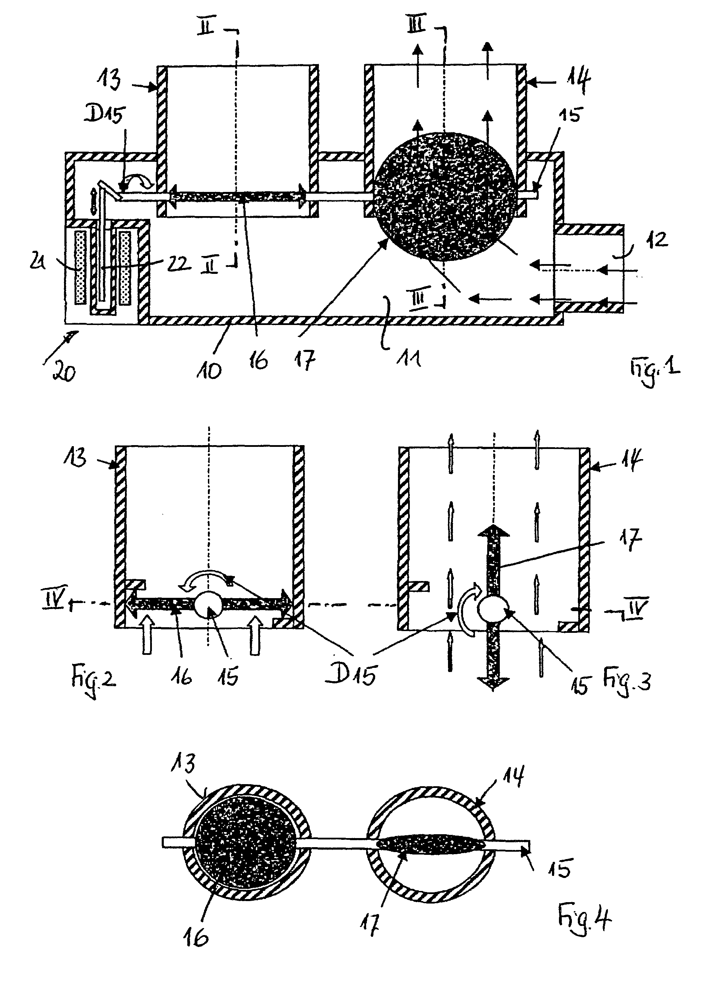

The changeover-valve means shown in Figs.1 to 4 forms a module 10, having a body which has a connection 12 which is connected to the outlet of the circulating pump. The body encloses a valve chamber 11 from which two risers 13 and 14 leading to the spray arms branch off. The internal cross-section of risers 13 and 14, which are both of the same configuration, is circular in this embodiment. The longitudinal axes of risers 13 and 14 lie in a common plane and extend parallel to one another. This allows a common mounting shaft 15 to be used for valve discs 16 and 17 which are arranged in risers 13 and 14, the outer contours of these discs being designed to suit the internal cross-section of risers 13 and 14. If the plane of valve disc 16 is perpendicular to the longitudinal axis of riser 13, then this disc is in the closed position and the washing liquid is unable to pass out of valve chamber 11 and into riser 13 and out to the spray arm connected to the riser. If the plane of valve disc 17 is on the longitudinal axis of riser 14, then this disc is in the open position and the washing liquid is able to pass out of valve chamber 11 and into riser 14 and out to the spray arm connected to the riser, as can be seen in particular from the partial sections in Figs. 2 to 4.

Valve discs 16 and 17 are attached to be held secure in rotation to the common mounting shaft 15 and their planes are offset from one another by 90°, so that in two switched positions which are 90° apart they each occupy different positions (closed and open or open and closed positions respectively).

Associated with module 10 is a single switchover means 20 which is in the form of a solenoid 21 with an armature 22. Armature 22 projects out into valve chamber 11 and is coupled to mounting shaft 15. A crank-type linkage member is able to convert the straight-line movement of armature 21 into a rotary movement D15 of mounting shaft 15. With the solenoid in its starting position (un-energised), valve discs 16 and 17 can be set to a first switched position which can be seen in Figs. 1 to 4. If the solenoid is energised, armature 22 turns mounting shaft 15 through 90° to the second switched position, so that valve disc 16 opens riser 13 and valve disc 17 closes off riser 14. If the solenoid is switched off, a return spring (not shown) in valve chamber 11 can return armature 22 to its starting position, i.e. to the first switched position. Mounting shaft 15 is turned alternately in the clockwise and anti-clockwise directions in this case. When this is the case, a limit can be set for at least the closed positions of valve discs 16 and 17 by stops, which can also be used to allow valve discs 16 and 17 to seal off risers 13 and 14, as can be seen from Figs. 2 and 3. With a switching angle of 90° it is possible to obtain switchover means 20 with valve discs 16 and 17 and risers 13 and 14 which are easy to manufacture.

However, switchover means 20 may also be designed in such a way that mounting shaft 15 continues to be turned in one and the same direction in steps of 90° at a time, in which case the switched positions of valve discs 16 and 17 alternate but are each time different between the two risers 13 and 14.

If the longitudinal axes of risers 13 and 14 are displaced from one another by an angle of displacement in a direction perpendicular to the plane of the drawing, then the offset on mounting shaft 15 will be equal not only to the switching angle of 90° but to this angle of displacement as well. Then, when mounting shaft 15 is turned, valve discs 16 and 17 alternate between their open and closed positions as in Fig.1 so that there is only ever one riser 13 or 14 connected to valve chamber 11.

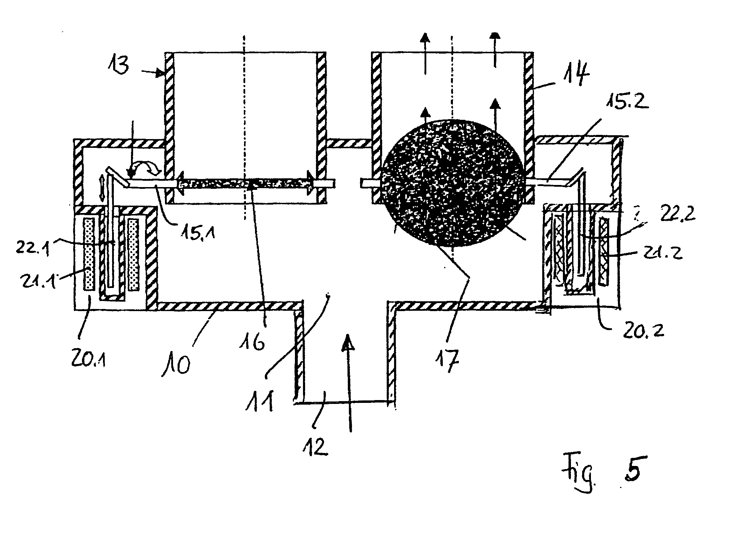

If the planes defined by the longitudinal axes of risers 13 and 14 diverge from one another in two directions, then it is preferable for the changeover-valve means to be designed as shown in Fig.5.

In this case, each valve disc 16 and 17 is rotatably mounted in the associated riser 13 or 14 by means of a separate mounting shaft 15.1 or 15.2 and each mounting shaft 15.1 and 15.2 has a separate switchover means 20.1 and 20.2 associated with it. Switchover means 20.1 and 20.2 once again comprise a solenoid 21.2 and 21.2 having an armature 22.1 and 22.2. Armatures 22.1 and 22.2 turn mounting shafts 15.1 and 15.2 and these shafts are connected to valve discs 16 and 17 in such a way that that the discs are held secure in rotation.

In the starting position shown, the first switched position, valve disc 16 closes off riser 13, whereas valve disc 17 keeps riser 14 open. The two solenoids 21.1 and 21.2 may be un-energised in this case. The coupling of armatures 22.1 and 22.2 to mounting shafts 15.1 and 15.2 may be accomplished in the same way as in the embodiment shown in Figs.1 to 4 and the turning of mounting shafts 15.1 and 15.2 may take place in two directions alternately or continually in one direction. During the washing process however solenoids 21.1 and 21.2, which previously were both in the closed position, can be energised alternately, thus causing risers 13 and 14 to be opened alternately in the phases of switching. Return springs are once again responsible for effecting the return to the starting position. The angle through which valve discs 16 and 17 are switched may also be selected to be smaller than 90° if the outer contour of valve discs 16 and 17 or the internal cross-section of risers 13 and 14 is oval and valve discs 16 and 17 are mounted to be rotatable on an axis of symmetry.

## Claims

1. Dishwasher having an upper and a lower crockery tray with associated rotatable spray arms, in which the spray arms are fed with washing liquid alternately by a circulating pump, the spray arms being connectable in succession to the output of the circulating pump by means of changeover-valve means (10) in the circulating circuit, **characterised in that**
the output (12) of the circulating pump is connected to a valve chamber (11) from which the two risers (13, 14) to the upper and lower spray arms branch off,
a valve disc (16, 17) is rotatably mounted in each of the risers (13, 14) to the spray arms, and
the valve discs (16, 17) are coupled together mechanically on a common mounting shaft (15) so that they are held secure in rotation and can be turned alternately to a first and a second switched position by means of a single switchover means (20) the disc planes being offset relative to one another by an angle of rotation of 90° between the first and second switched positions, with one valve disc (16) closing off its associated riser (13) and the other valve disc (17) keeping open its associated riser (14) in the first switched position, whereas in the second switched position the one valve disc (16) keeps its associated riser (13) open and the other valve disc (17) closes off its associated riser (14).

2. Dishwasher having an upper and a lower crockery tray with associated rotatable spray arms, in which the spray arms are fed with washing liquid alternately by a circulating pump, the spray arms being connectable in succession to the output of the circulating pump by means of changeover-valve means (10) in the circulating circuit, **characterised in that**
the output (12) of the circulating pump is connected to a valve chamber (11) from which the two risers (13, 14) to the upper and lower spray arms branch off,
a valve disc (16, 17) is rotatably mounted in each of the risers (13, 14) to the spray arms, and
each valve disc (16, 17) has associated with it a switchover means (20.1, 20.2) by which the associated valve disc (16, 17) can be turned to a first and a second switched position and
the switchover means (20.1, 20.2) are actuatable alternately, in which case one valve disc (16) closes off its associated riser (13) and the other valve disc (17) keeps its associated riser (14) open in the first switched position, whereas in the second switched position the one valve disc (16) keeps its associated riser (14) open and the other valve disc (17) closes off its associated riser (14).

3. Dishwasher according to claim 1 or 2, **characterised in that**
the outer contours of the valve discs (16, 17) are matched to the internal cross-section of the risers (13, 14) and
the shaft(s) (15, 15.1, 15.2) on which the discs are mounted are aligned along an axis of symmetry of the valve discs (16, 17) perpendicularly to the longitudinal axis of the associated riser (13, 14).

4. Dishwasher according to claim 3, **characterised in that**
the outer contours of the valve discs (16, 17) and the internal cross-sections of the risers (13, 14) are circular or oval.

5. Dishwasher according to any of claims 2, 3 or 4, **characterised in that**
the valve discs (16, 17) are arranged on separate mounting shafts (15.1, 15.2) and
in each switched state of the switchover means (20.1, 20.2) the valve discs (16, 17) take up different switched positions (opened and closed positions respectively or closed and open positions respectively).

6. Dishwasher according to claim 1, **characterised in that**
the two switched positions of the valve discs can be set to by turning the mounting shafts through 90° alternately in two directions of rotation.

7. Dishwasher according to claim 1, **characterised in that**
the two switched positions of the valve discs (16, 17) can be set to by turning the mounting shafts (15, 15.1, 15.2) continually through 90° at a time in one and the same direction.

8. Dishwasher according to claims 1 and 6, **characterised in that**
limits are set for the switched positions of the valve discs (16, 17) in the risers (13, 14) by stops, at least for the closed position.

9. Dishwasher according to claim 8, **characterised in that**
the stops are used to seal off the valve discs (16, 17) in their closed positions.

10. Dishwasher according to any of claims 1 to 9, **characterised in that**
the switchover means (20, 20.1, 20.2) are in the form of a solenoid (21, 21.1, 21.2) having an armature (22, 22.1, 22.2, the armature being coupled to the associated mounting shaft (15, 15.1, 15.2) in the valve chamber (11),
the armature (22, 22.1, 22.2) and hence the valve discs (16, 17) are held in the first switched position by return springs when the solenoid is not energised, and
the armature (22, 22.1, 22.2) and the valve discs (16, 17) are set to the second switched position when the solenoid is energised.

11. Dishwasher according to claim 10, **characterised in that**
the armatures (22, 22.1, 22.2) of the solenoids are coupled to the mounting shafts (15, 15.1, 15.2) be means of crank-type linkage members which change the straight-line movements of the armatures (22, 22.1, 22.2) into rotary movements by the shafts (15, 15.1, 15.2) on which the valve discs (16, 17) are mounted.

## Patentansprüche

1. Geschirrspülmaschine mit einer oberen und unteren Geschirrablage mit zugehörigen rotierbaren Sprüharmen, bei der die Sprüharme wechselweise mit Waschflüssigkeit über eine Umlaufpumpe gespeist werden, wobei die Sprüharme in Reihe an den Ausstoß der Umlaufpumpe mittels Umschaltventilen (10) in dem Umlaufkreislauf verbindbar sind, **dadurch gekennzeichnet, dass** der Ausstoß (12) der Umlaufpumpe mit einer Ventilkammer (11) verbunden ist, von der sich zwei Steigleitungen (13, 14) zu dem oberen und unteren Sprüharm abzweigen,
wobei eine Ventilscheibe (16, 17) rotierbar in jeder der Steigleitungen (13, 14) zu den Sprüharmen befestigt ist, und
die Ventilscheiben (16, 17) mechanisch auf einer gemeinsamen Befestigungswelle (15) derart zusammengekoppelt sind, dass sie bei der Rotation sicher gehalten werden und abwechselnd zu einer ersten und einer zweiten Schaltposition mittels eines einzelnen Umschaltelements (20) gedreht werden können, wobei die Scheibenebenen relativ zueinander um einen Rotationswinkel von 90° zwischen der ersten und zweiten Umschaltposition versetzt sind, wobei in der ersten Schaltposition eine Ventilscheibe (16) ihre zugehörige Steigleitung (13) verschließt und die andere Ventilscheibe (17) ihre zugehörige Steigleitung (14) offen hält, wohingegen in der zweiten Schaltposition die eine Ventilscheibe (16) ihre zugehörige Steigleitung (13) offen hält und die andere Ventilscheibe (17) ihre zugehörige Steigleitung (14) abschließt.

2. Geschirrspülmaschine mit einer oberen und unteren Geschirrablage mit zugehörigen rotierbaren Sprüharmen, bei der die Sprüharme abwechselnd über eine Umlaufpumpe mit Waschflüssigkeit gespeist werden, wobei die Sprüharme in Reihe mit dem Ausstoß der Umlaufpumpe mittels Umschaltventil-Elementen (10) in dem Umlaufkreislauf verbindbar sind, **dadurch gekennzeichnet, dass** der Ausstoß (12) der Umlaufpumpe mit einer Ventilkammer (11) verbunden ist, von der sich zwei Steigleitungen (13, 14) zu dem oberen und unteren Sprüharm abzweigen,
wobei eine Ventilscheibe (16, 17) rotierbar in jeder der Steigleitungen (13, 14) zu den Sprüharmen befestigt ist, und
jede Ventilscheibe (16, 17) ein zugehöriges Umschalt-Element (20.1, 20.2) aufweist, durch welches die zugehörige Ventilscheibe (16, 17) zu einer ersten und einer zweiten Schaltposition gedreht werden kann, und
die Schaltelemente (20.1, 20.2) abwechselnd betätigbar sind, wobei in diesem Fall eine Ventilscheibe (16) ihre zugehörige Steigleitung (13) abschließt und die andere Ventilscheibe (17) ihre zugehörige Steigleitung (14) in der ersten Schaltposition offen hält, wohingegen in der zweiten Schaltposition die eine Ventilscheibe (16) ihre zugehörige Steigleitung (14) offen hält und die andere Ventilscheibe (17) ihre zugehörige Steigleitung (14) verschließt.

3. Geschirrspülmaschine gemäß Anspruch 1 oder 2, **dadurch gekennzeichnet, dass** die äußere Kontur der Ventilscheiben (16, 17) auf den inneren Querschnitt der Steigleitungen (13, 14) angepasst ist und
die Welle(n) (15, 15.1, 15.2), auf der die Scheiben befestigt sind, entlang einer Symmetrieachse der Ventilscheiben (16, 17) senkrecht zu der Längsachse der zugehörigen Steigleitung (13, 14) ausgerichtet ist (sind).

4. Geschirrspülmaschine gemäß Anspruch 3, **dadurch gekennzeichnet, dass** die äußere Kontur der Ventilscheiben (16, 17) sowie die inneren Querschnitte der Steigleitung (13, 14) rund oder oval sind.

5. Geschirrspülmaschine gemäß einem der Ansprüche 2, 3 oder 4, **dadurch gekennzeichnet, dass** die Ventilscheiben 16, 17 auf verschiedenen Befestigungswellen (15.1, 15.2) angeordnet sind und
in jedem geschalteten Zustand der Umschalt-Elemente (20.1, 20.2) die Ventilscheiben (16, 17) verschiedene Schaltpositionen einnehmen (jeweils geöffnete und geschlossene Positionen oder geschlossene und offene Positionen).

6. Geschirrspülmaschine gemäß Anspruch 1, **dadurch gekennzeichnet, dass** zwei Schaltpositionen der Ventilscheiben durch Drehen der Befestigungswellen um 90° abwechselnd in zwei Rotationsrichtungen eingestellt werden können.

7. Geschirrspülmaschine gemäß Anspruch 1, **dadurch gekennzeichnet, dass** zwei Schaltpositionen der Ventilscheiben (16, 17) durch Drehen der Befestigungswellen (15, 15.1, 15.2) kontinuierlich um 90° zur gleichen Zeit und in die gleiche Richtung eingestellt werden können.

8. Geschirrspülmaschine gemäß der Ansprüche 1 und 6, **dadurch gekennzeichnet, dass** zumindest für die geschlossene Position Grenzen für die Schaltpositionen der Ventilscheiben (16, 17) in den Steigleitungen (13, 14) durch Stopper eingestellt sind.

9. Geschirrspülmaschine gemäß Anspruch 8, **dadurch gekennzeichnet, dass** die Stopper dazu verwendet werden, die Ventilscheiben (16, 17) in deren geschlossenen Positionen abzudichten.

10. Geschirrspülmaschine gemäß einem der Ansprüche 1 bis 9, **dadurch gekennzeichnet, dass** die Umschaltelemente (20, 20.1, 20.2) in der Form einer Spule (21, 21.1, 21.2) mit einem Anker (22, 22.1, 22.1) vorliegen, wobei der Anker mit der zugehörigen Befestigungswelle (15, 15.1, 15.2) in der Ventilkammer (11) gekoppelt ist, wobei der Anker (22, 22.1, 22.2) und somit die Ventilscheiben (16, 17) in der ersten Schaltposition durch Rückholfederung gehalten werden, wenn die Spule nicht unter Spannung steht, und
der Anker (22, 22.1, 22.2), sowie die Ventilscheiben (16, 17) auf die zweite Schaltposition eingestellt sind, wenn die Spule unter Spannung steht.

11. Geschirrspülmaschine gemäß Anspruch 10, **dadurch gekennzeichnet, dass** die Anker (22, 22.1, 22.2) der Spulen mit den Befestigungswellen (15, 15.1, 15.2) mittels kurbelartiger Verbindungselemente, welche die gradlinigen Bewegungen der Anker (22, 22.1, 22.2) in Rotationsbewegungen der Wellen (15, 15.1, 15.2), auf denen die Ventilscheiben (16, 17) befestigt sind, ändern.

## Revendications

1. Machine à laver la vaisselle possédant des plateaux à vaisselle supérieur et inférieur munis de bras d'arrosage pivotants associés, dans laquelle les bras d'arrosage sont alimentés en liquide de lavage de manière alternée par une pompe de circulation, les bras d'arrosage pouvant être reliés en succession à la sortie de la pompe de circulation à l'aide de vannes de substitution (10) situées dans le circuit de circulation, **caractérisée en ce que**
la sortie (12) de la pompe de circulation est reliée à une chambre de vanne (11) à partir de laquelle les deux tubes verticaux (13, 14) allant vers les bras d'arrosage supérieur et inférieur bifurquent,
un disque de vanne (16, 17) est monté de manière rotative dans chacun des tubes verticaux (13, 14) allant vers les bras d'arrosage, et
**en ce que** les disques de vanne (16, 17) sont couplés ensemble mécaniquement sur un arbre de montage commun (15) de telle sorte qu'ils soient maintenus en rotation et qu'ils puissent être placés alternativement dans une première et une seconde positions de fonctionnement à l'aide d'un seul moyen d'inversion (20), les plans de disque étant décalés les uns par rapport aux autres par un angle de rotation de 90° entre la première et la seconde positions de fonctionnement, avec un disque de vanne (16) fermant son tube vertical associé (13) et l'autre disque de vanne (17) maintenant ouvert son tube vertical associé (14) dans la première position de fonctionnement, tandis que, dans la seconde position de fonctionnement, un disque de vanne (16) maintient son tube vertical associé (13) ouvert et l'autre disque de vanne (17) ferme son tube vertical associé (14).

2. Machine à laver la vaisselle possédant des plateaux à vaisselle supérieur et inférieur munis de bras d'arrosage pivotants associés, dans laquelle les bras d'arrosage sont alimentés en liquide de lavage de manière alternée par une pompe de circulation, les bras d'arrosage pouvant être reliés en succession à la sortie de la pompe de circulation à l'aide d'une vanne de substitution (10) située dans le circuit de circulation, **caractérisée en ce que**
la sortie (12) de la pompe de circulation est reliée à une chambre de vanne (11) à partir de laquelle les deux tubes verticaux (13, 14) allant vers les bras d'arrosage supérieur et inférieur bifurquent,
un disque de vanne (16, 17) est monté de manière rotative dans chacun des tubes verticaux (13, 14) allant vers les bras d'arrosage, et
**en ce que** chaque disque de vanne (16, 17) possède des moyens d'inversion (20.1, 20.2) associés à celui-ci, grâce auxquels le disque de vanne associé (16, 17) peut être tourné dans une première et une seconde positions de fonctionnement, et
**en ce que** les moyens d'inversion (20.1, 20.2) peuvent être actionnés de manière alternée, auquel cas un disque de vanne (16) ferme son tube vertical associé (13) et l'autre disque de vanne (17) maintient son tube vertical associé (14) ouvert dans la première position de fonctionnement, tandis que, dans la seconde position de fonctionnement, un disque de vanne (16) maintient son tube vertical associé (14) ouvert et l'autre disque de vanne (17) ferme son tube vertical associé (14).

3. Machine à laver la vaisselle selon la revendication 1 ou 2, **caractérisée en ce que**
les contours extérieurs des disques de vanne (16, 17) s'adaptent à la section transversale interne des tubes verticaux (13, 14) et
**en ce que** le/les arbre(s) (15, 15.1, 15.2) sur le(s)quel(s) les disques sont montés sont alignés le long d'un axe de symétrie des disques de vanne (16, 17), perpendiculairement à l'axe longitudinal du tube vertical associé (13, 14).

4. Machine à laver la vaisselle selon la revendication 3, **caractérisée en ce que**
les contours extérieurs des disques de vanne (16, 17) et la section transversale interne des tubes verticaux (13, 14) sont circulaires ou ovales.

5. Machine à laver la vaisselle selon l'une quelconque des revendications 2, 3 ou 4, **caractérisée en ce que**
les disques de vanne (16, 17) sont agencés sur des arbres de montage séparés (15.1, 15.2)
et
**en ce que**, dans chaque état de fonctionnement du moyen d'inversion (20.1, 20.2), les disques de vanne (16, 17) adoptent différentes positions de fonctionnement (positions ouvertes et fermées respectivement, ou positions fermées et ouvertes, respectivement).

6. Machine à laver la vaisselle selon la revendication 1, **caractérisée en ce que**
les deux positions de fonctionnement des disques de vanne peuvent être définies en tournant les arbres de montage à 90° de manière alternée dans deux sens de rotation.

7. Machine à laver la vaisselle selon la revendication 1, **caractérisée en ce que**
les deux positions de fonctionnement des disques de vanne (16, 17) peuvent être définies en tournant les arbres de montage (15, 15.1, 15.2) de manière continue à 90° à la fois dans un seul et même sens.

8. Machine à laver la vaisselle selon les revendications 1 à 6, **caractérisée en ce que**
des limites sont définies pour les positions de fonctionnement des disques de vanne (16, 17) dans les tubes verticaux (13, 14) à l'aide de butées, au moins pour la position fermée.

9. Machine à laver la vaisselle selon la revendication 8, **caractérisée en ce que**
les butées sont utilisées pour fermer les disques de vanne (16, 17) dans leurs positions fermées.

10. Machine à laver la vaisselle selon l'une quelconque des revendications 1 à 9, **caractérisée en ce que**
les moyens d'inversion (20, 20.1, 20.2) sont sous la forme d'une solénoïde (21, 21.1, 21.2) possédant une armature (22, 22.1, 22.2), l'armature étant couplée à l'arbre de montage associé (15, 15.1, 15.2) dans la chambre de vanne (11), l'armature (22, 22.1, 22.2) et par conséquent les disques de vanne (16, 17) sont maintenus dans la première position de fonctionnement par des ressorts de rappel lorsque la solénoïde n'est pas alimentée, et
**en ce que** l'armature (22, 22.1, 22.2) et les disques de vanne (16, 17) sont placés dans la seconde position de fonctionnement lorsque la solénoïde est alimentée.

11. Machine à laver la vaisselle selon la revendication 10, **caractérisée en ce que**
les armatures (22, 22.1, 22.2) des solénoïdes sont couplées aux arbres de montage (15, 15.1, 15.2) à l'aide d'éléments de liaison à coude qui modifient les mouvements en ligne droite des armatures (22, 22.1, 22.2) en mouvements de rotation à l'aide des arbres (15, 15.1, 15.2) sur lesquels les disques de vanne (16, 17) sont montés.
